# EUROPÄISCHE PATENTSCHRIFT

(11) **EP 3 900 991 B1**
(45) Veröffentlichungstag und Bekanntmachung des Hinweises auf die Patenterteilung: **28.12.2022**
(21) Anmeldenummer: 21167169.8
(22) Anmeldetag: 07.04.2021
(51) Int. Cl.: B60T 13/26, B60T 13/68

(54) **VERFAHREN ZUR STEUERUNG EINER PNEUMATISCHEN BREMSANLAGE EINES ANHÄNGERFAHRZEUGS**
METHOD FOR CONTROLLING A PNEUMATIC BRAKE SYSTEM OF A TRAILER VEHICLE
PROCÉDÉ DE COMMANDE D'UNE INSTALLATION PNEUMATIQUE DE FREINAGE D'UNE REMORQUE

(30) Priorität: 08.04.2020 DE 102020109879
(43) Veröffentlichungstag der Anmeldung: 27.10.2021
(73) Patentinhaber: ZF CV Systems Global GmbH, 3006 Bern (CH)
(72) Erfinder: LASKAWY, Ivo, 21149 Hamburg (DE)
(74) Vertreter: ZF Friedrichshafen AG

(56) Entgegenhaltungen:
- DE-A1- 10 236 920
- DE-A1- 19 609 222
- DE-A1-102014 002 614
- DE-A1-102015 112 490
- DE-A1-102017 009 916
- US-A1- 2019 263 371

## Beschreibung

Die Erfindung betrifft ein Verfahren zur Steuerung einer pneumatischen Bremsanlage eines Anhängerfahrzeugs, welches mit einem eine hydraulische oder pneumatische Bremsanlage aufweisenden Zugfahrzeug verbunden ist. Die Bremsanlage des Zugfahrzeugs weist ein Fußbremsventil mit einem elektrischen Schalter, ein Anhängersteuerventil mit elektrisch gesteuerten Einlass- und Auslassventilen sowie mit einem pneumatisch gesteuerten Relaisventil auf. Außerdem weist die Bremsanlage ein Backupventil mit einem elektrisch gesteuerten Redundanzventil, einem hydraulisch von einem Bremsdruck steuerbaren Relaisventil und einen Bremswertsensor auf. Hierbei ist verfahrensgemäß vorgesehen, dass der elektrische Schalter zu Beginn einer Betätigung des Fußbremsventils aus einer Öffnungsstellung heraus geschlossen oder aus einer Schließstellung heraus geöffnet und dieses Schaltsignal als Bremsstartsignal für einen beginnenden Bremsvorgang an ein elektronisches Steuergerät übermittelt wird. Außerdem wird mittels des Bremswertsensors ein den aktuellen Verzögerungswunsch des Fahrers repräsentierender Bremswert erfasst und dieser als Bremswertsignal an das elektronische Steuergerät übermittelt.

Moderne Zugfahrzeuge, wie Lastkraftwagen und Sattelzugmaschinen, die vorwiegend für Fahrten auf befestigten Straßen und Autobahnen vorgesehen sind, weisen üblicherweise eine druckluftbetriebene Bremsanlage mit einer elektronischen Steuerung auf. Dagegen sind moderne Zugfahrzeuge, wie Traktoren, die für den Einsatz abseits von befestigten Straßen und Wegen ausgelegt sind, häufig mit hydraulischen Bremsanlagen mit elektronischer Steuerung ausgerüstet. Die Bremsanlagen beider Fahrzeuggattungen weisen meistens eine Ventilanordnung zur Steuerung einer pneumatischen Bremsanlage eines ankoppelbaren Anhängerfahrzeugs auf, welche ein Anhängersteuerventil mit elektrisch gesteuerten Einlass- und Auslassventilen und ein pneumatisch gesteuertes Relaisventil sowie ein Backupventil mit einem elektrisch gesteuerten Redundanzventil und einem bremsdruckgesteuerten Relaisventil umfasst.

Im Normalbetrieb wird in dem Anhängersteuerventil ein mittels eines Kompressors erzeugter und in einer Druckluftversorgungsanlage aufbereiteter Vorratsdruck an einen Kupplungskopf "Vorrat" (rot) des Zugfahrzeugs durchgeleitet. Außerdem wird in Abhängigkeit eines von einem Bremswertsensor erfassten elektronischen Bremswertsignals mittels eines über die Einlass- und Auslassventile eingestellten Steuerdruckes in dem Relaisventil des Anhängersteuerventils ein entsprechender Bremssteuerdruck eingestellt, der über ein Wechselventil an den Kupplungskopf "Bremse" (gelb) des Zugfahrzeugs geführt wird.

Bei einem Ausfall der elektronischen Regelung oder einem Wegfall des elektronischen Bremswertsignals wird durch die Abschaltung der Einlass- und Auslassventile der Steuereingang des zugeordneten Relaisventils entlüftet und damit das Anhängersteuerventil deaktiviert. Zudem wird dann durch die Umschaltung des Redundanzventils von einer Sperrstellung in eine Offenstellung der Vorratsdruckeingang oder der Bremssteuerausgang des zugeordneten Relaisventils freigeschaltet und dadurch das Backupventil aktiviert. In dem Relaisventil des Backupventils wird in Abhängigkeit des an einer Bremsleitung des Zugfahrzeugs abgegriffenen Bremsdruckes ein Bremssteuerdruck für das Anhängerfahrzeug eingestellt und über das Wechselventil an den Kupplungskopf "Bremse" (gelb) geführt. Hierdurch ist die Funktion der Betriebsbremsen des Anhängerfahrzeugs auch bei einem Ausfall der elektronischen Steuerung oder einem Wegfall des elektronischen Bremswertsignals gewährleistet.

Für die entsprechende Ansteuerung der Einlass- und Auslassventile des Anhängersteuerventils und des Redundanzventils des Backupventils mittels des elektronischen Steuergeräts ist somit ein Bremsstartsignal für einen beginnenden Bremsvorgang sowie ein Bremswertsignal für die Höhe der von einem Fahrer angeforderten Bremsverzögerung erforderlich. Wenn das Bremsstartsignal vorliegt, wird durch die Umschaltung des Redundanzventils der Vorratsdruckeingang oder der Bremssteuerausgang des dortigen Relaisventils abgesperrt und dadurch das Backupventil deaktiviert. Zudem wird dann über die Einlass- und Auslassventile des Anhängersteuerventils ein Steuerdruck eingestellt, der in dem dortigen Relaisventil zur Einstellung eines dem Bremswertsignal entsprechenden Bremssteuerdruckes führt. Bei angekoppeltem Anhängerfahrzeug wird dieser Bremssteuerdruck über eine Bremssteuerleitung des Zugfahrzeugs, den Kupplungskopf "Bremse" (gelb) und eine Bremssteuerleitung des Anhängerfahrzeugs an das im Anhängerfahrzeug angeordnete Anhängerbremsventil geführt, in dem der Bremssteuerdruck in einen entsprechenden Bremsdruck für die Radbremszylinder des Anhängerfahrzeugs umgesetzt wird.

Bei Zugfahrzeugen, die vorwiegend für Fahrten auf befestigten Straßen und Autobahnen vorgesehen und mit einer druckluftbetriebenen Bremsanlage ausgerüstet sind, sind der elektrische Schalter und der elektronische Bremswertsensor meistens in oder an einem Fußbremsventil angeordnet, in welchem ein Stößel gegen die Rückstellkraft einer Feder von einem Bremspedal axial verschiebbar gelagert ist. Mindestens ein Betätigungselement, wie beispielsweise eine Druckplatte, ein Stößel oder ein Permanentmagnet, ist mit dem Stößel fest verbunden oder steht mit diesem in Stellverbindung, mittels dem der Schalter und/oder der Bremswertsensor betätigt oder angesteuert wird.

Ein solches Fußbremsventil mit einem elektrischen Schalter und einem elektronischen Bremswertsensor ist beispielsweise aus der DE 10 2014 010 815 A1 bekannt. Der elektrische Schalter ist dort als ein elektromechanischer Schalter ausgebildet, der bei einer Betätigung des Bremspedals nach kurzem Leerweg eines Stößelkolbens von diesem über eine Druckplatte und einen Schwenkhebel geschlossen wird. In dieser Druckschrift ist auch erwähnt, dass der elektrische Schalter alternativ dazu als ein berührungslos und somit verschleißfrei wirksamer Näherungsschalter ausgebildet sein kann. Ob ein solcher Schalter bei einer Betätigung des Bremspedals in seine Schließstellung oder in seine Öffnungsstellung gebracht wird ist bekanntermaßen nicht entscheidend. Wichtig ist lediglich, dass ein Schaltsignal erzeugt wird. Der elektronische Bremswertsensor ist als ein Wegsensor ausgebildet, dessen Funktionsprinzip auf der Änderung eines elektrischen Widerstands, einer Induktivität oder einer Kapazität oder auf dem Zählen von Impulsen beruht. Als Signalgeber des Wegsensors dient ein Körper, der formschlüssig mit der Druckplatte verbunden und in einem seitlichen Raum des Fußbremsventils parallel verschiebbar zu dem Stößelkolben geführt ist.

Bei Zugfahrzeugen, die vorwiegend für Fahrten abseits befestigter Straßen vorgesehen und mit einer hydraulischen Bremsanlage ausgerüstet sind, ist üblicherweise nur ein elektrischer Schalter in oder an einem Fußbremsventil angeordnet. Der elektronische Bremswertsensor ist hingegen als ein hydraulischer Drucksensor ausgebildet, welcher an eine Bremsleitung des Zugfahrzeugs angeschlossen ist. Der Drucksensor kann separat in dem Zugfahrzeug oder innerhalb des Backupventils angeordnet sein.

Eine solche Bremsanlage eines hydraulisch gebremsten Zugfahrzeugs mit einem elektrischen Schalter und einem als ein hydraulischer Drucksensor ausgebildeten elektronischen Bremswertsensor ist in mehreren Ausführungen in der DE 10 2014 002 614 A1 dargestellt und beschrieben. Das Redundanzventil ist bei den Ventilanordnungen dieser bekannten Bremsanlage als ein 2/2-Wege-Magnetschaltventil ausgebildet, welches in dem Backupventil an dem Bremssteuerausgang des Relaisventils angeordnet ist. Im unbestromten Zustand ist das Redundanzventil geöffnet, sodass der in dem Relaisventil in Abhängigkeit eines an einer hydraulischen Bremsleitung des Zugfahrzeugs abgegriffenen Bremsdruckes eingesteuerte Bremssteuerdruck über ein Wechselventil an den Kupplungskopf "Bremse" (gelb) gelangt. Im bestromten Zustand ist das Redundanzventil geschlossen, wodurch der in dem Relaisventil eingesteuerte Bremssteuerdruck nicht mehr an den Kupplungskopf "Bremse" (gelb) gelangt, weshalb das Backupventil deaktiviert ist. Der als elektronischer Bremswertsensor wirksame hydraulische Drucksensor, der das elektronische Bremswertsignal für das elektronisch gesteuerte Anhängersteuerventil liefert, ist bei diesen Ausführungen der Bremsanlage außerhalb des Backupventils angeordnet.

Bei einem Fahrzeuggespann mit einem hydraulisch oder pneumatisch gebremsten Zugfahrzeug und einem pneumatisch gebremsten Anhängerfahrzeug der vorbeschriebenen Art kann es vorkommen, dass das Anhängerfahrzeug bei einem Bremsvorgang nicht gebremst wird. Dies geschieht dann, wenn bei einer Betätigung des Bremspedals der elektrische Schalter am Fußbremsventil zwar geschaltet wird, jedoch der Bremswertsensor aufgrund eines vorliegenden Defektes kein Bremswertsignal in Form eines Stellweges oder eines Bremsdruckes an das elektronische Steuergerät übermittelt. In diesem Fall wird in dem Anhängersteuerventil außer einem geringen Vorsteuerdruck kein Bremssteuerdruck für das Anhängerfahrzeug ausgesteuert, weil das Bremswertsignal des Bremswertsensors den Wert Null hat. Zugleich ist aber das Backupventil aufgrund des geschlossenen elektrischen Schalters deaktiviert, sodass auch in dem dortigen Relaisventil kein redundanter Bremssteuerdruck ausgesteuert wird oder von diesem an den Kupplungskopf "Bremse" (gelb) gelangt.

Der vorliegenden Erfindung liegt daher die Aufgabe zugrunde, ein Verfahren zur Steuerung einer pneumatischen Bremsanlage eines Anhängerfahrzeugs der eingangs genannten Art anzugeben, mit dem ein ungebremster Zustand des Anhängerfahrzeugs bei einem Ausfall des Bremswertsensors möglichst ohne zusätzlichen apparativen Aufwand verhindert werden kann.

Diese Aufgabe ist durch ein Verfahren mit den Merkmalen des Anspruchs 1 gelöst. Vorteilhafte Weiterbildungen sind in den abhängigen Ansprüchen definiert.

Demnach betrifft die Erfindung ein Verfahren zur Steuerung einer pneumatischen Bremsanlage eines Anhängerfahrzeugs, welches mit einem eine hydraulische oder pneumatische Bremsanlage aufweisenden Zugfahrzeug verbunden ist, wobei die Bremsanlage des Zugfahrzeugs
- ein Fußbremsventil mit einem elektrischen Schalter,
- ein Anhängersteuerventil mit elektrisch gesteuerten Einlass- und Auslassventilen sowie mit einem pneumatisch gesteuerten Relaisventil,
- und ein Backupventil mit einem elektrisch gesteuerten Redundanzventil, einem hydraulisch von einem Bremsdruck steuerbaren Relaisventil und einem Bremswertsensor aufweist,

Verfahrensgemäß ist vorgesehen, dass der elektrische Schalter zu Beginn einer Betätigung des Fußbremsventils aus einer Öffnungsstellung heraus geschlossen oder aus einer Schließstellung heraus geöffnet und dieses Schaltsignal als Bremsstartsignal für einen beginnenden Bremsvorgang an ein elektronisches Steuergerät übermittelt wird, und dass mittels des Bremswertsensors ein den aktuellen Verzögerungswunsch des Fahrers repräsentierender Bremswert erfasst sowie als Bremswertsignal an das elektronische Steuergerät übermittelt wird.

Zur Lösung der gestellten Aufgabe ist vorgesehen, dass der Bremswertsensor zur Ermittlung eines beginnenden Bremsvorgangs genutzt wird, und dass das Backupventil erst dann durch eine Umschaltung des Redundanzventils von einer Offenstellung in eine Sperrstellung deaktiviert wird, wenn das mittels des Bremswertsensors erfasste Bremswertsignal einen vorgegebenen Mindestsignalwert erreicht oder überschritten hat.

Dadurch, dass das Backupventil gemäß dem gerade genannten Verfahren erst dann durch eine Umschaltung des Redundanzventils von einer Offenstellung in eine Sperrstellung deaktiviert wird, wenn das über den Bremswertsensor erfasste Bremswertsignal einen vorgegebenen Mindestsignalwert erreicht oder überschritten hat, ist der zuvor erwähnte Mangel eines ungebremsten Anhängerfahrzeugs auf einfache Weise und ohne einen apparativen Mehraufwand behoben.

Wenn nun der Fahrer zur Auslösung eines Bremsvorgangs das Fußbremsventil über das Bremspedal betätigt, so wird solange über das Relaisventil des Backupventils ein Bremssteuerdruck in Abhängigkeit des Bremsdruckes in der Bremsleitung des Zugfahrzeugs ausgesteuert und an den Kupplungskopf "Bremse" (gelb) geführt, bis das über den Bremswertsensor erfasste Bremswertsignal den vorgegebenen Mindestsignalwert erreicht oder überschritten hat.

Sofern der Bremswertsensor jedoch defekt ist oder aus anderen Gründen kein Bremswertsignal an das elektronische Steuergerät übermittelt wird, wird zwar aufgrund der nicht erfolgenden Ansteuerung der Einlass- und Auslassventile des Anhängersteuerventils in dem zugeordneten Relaisventil kein Bremssteuerdruck ausgesteuert. Da dann aber das Redundanzventil nicht in seine Sperrstellung umgeschaltet wurde, bleibt das Backupventil aktiviert, sodass in dem zugeordneten Relaisventil ein Bremssteuerdruck ausgesteuert und an den Kupplungskopf "Bremse" (gelb) geleitet wird. Dadurch ist sichergestellt, dass das Anhängerfahrzeug bei einem Bremsvorgang auch bei einem Defekt des Bremswertsensors oder einem aus einem anderen Grund fehlenden Bremswertsignal gebremst wird.

Der Bremswertsensor kann zusätzlich zu dem elektrischen Schalter auch zur Ermittlung eines beginnenden Bremsvorgangs genutzt werden. In diesem Fall wird das Backupventil erst dann deaktiviert, wenn der elektrische Schalter geschlossen ist und das mittels des Bremswertsensors erfasste Bremswertsignal den vorgegebenen Mindestsignalwert erreicht oder überschritten hat. Neben einem Defekt des Bremswertsensors oder einem fehlenden Bremswertsignal führt dann auch ein defekter elektrischer Schalter in oder an dem Fußbremsventil oder ein fehlendes Schaltsignal des Schalters dazu, dass das Backupventil durch die Umschaltung des Redundanzventils von einer Offenstellung in eine Sperrstellung deaktiviert und das Anhängersteuerventil durch die Ansteuerung der Einlass- und Auslassventile aktiviert wird.

Der Bremswertsensor kann jedoch auch anstelle des elektrischen Schalters zur Ermittlung eines beginnenden Bremsvorgangs genutzt werden. Der elektrische Schalter in oder an dem Fußbremsventil kann dann weggelassen oder dessen verfügbares Schaltsignal nicht verwendet werden. In diesem Fall wird das Backupventil nur dann deaktiviert, wenn das mittels des Bremswertsensors erfasste Bremswertsignal den vorgegebenen Mindestsignalwert erreicht oder überschritten hat.

Bei einer Ausbildung des Bremswertsensors als ein Wegsensor, der in oder an dem Fußbremsventil in Wirkverbindung mit einem axial verschiebbaren Stößel angeordnet ist, entspricht der Mindestsignalwert bevorzugt dem Leerweg des Stößels oder einem den Leerweg um maximal 20% übersteigenden Stellweg des Stößels. Der Stellweg eines Bremspedals wird üblicherweise mit einer Übersetzung im Bereich zwischen 6 : 1 und 7 : 1 auf den Stößel des Fußbremsventils übertragen. Bei einem von dem Wegsensor erfassten Gesamtstellweg des Stößels von beispielsweise 9 mm beträgt der Leerweg typischerweise 0,75 mm und der von dem Stößel genutzte Stellweg 7 mm. Demzufolge kann der Mindestsignalwert in diesem Fall auf einen Wert zwischen 0,75 mm und 0,9 mm festgelegt sein (0,75 mm × 1,2 = 0,9 mm).

Bei einer Ausbildung des Bremswertsensors als ein Drucksensor, der an eine Bremsleitung des Zugfahrzeugs angeschlossen ist, entspricht der Mindestsignalwert vorzugsweise dem Ansprechdruck der Radbremsen des Zugfahrzeugs oder einem den Ansprechdruck der Radbremsen um maximal 20% übersteigenden Bremsdruck. Bei pneumatischen Bremsanlagen liegt der Ansprechdruck der Radbremsen bei einem Wert von 0,2 × 10⁵ Pa bis 0,25 × 10⁵ Pa. Demzufolge kann der Mindestsignalwert in diesem Fall auf einen Wert zwischen 0,2 × 10⁵ Pa bis 0,3 × 10⁵ Pa festgelegt sein (0,25 × 10⁵ Pa × 1,2 = 0,3 × 10⁵ Pa). Bei hydraulischen Hochdruck-Bremsanlagen liegt der Ansprechdruck der Radbremsen dagegen bei 3 × 10⁵ Pa bis 3,5 × 10⁵ Pa. Demzufolge kann der Mindestsignalwert in diesem Fall auf einen Wert zwischen 3 × 10⁵ Pa bis 4,2 × 10⁵ Pa festgelegt sein (3 × 10⁵ Pa × 1,2 = 4,2 × 10⁵ Pa).

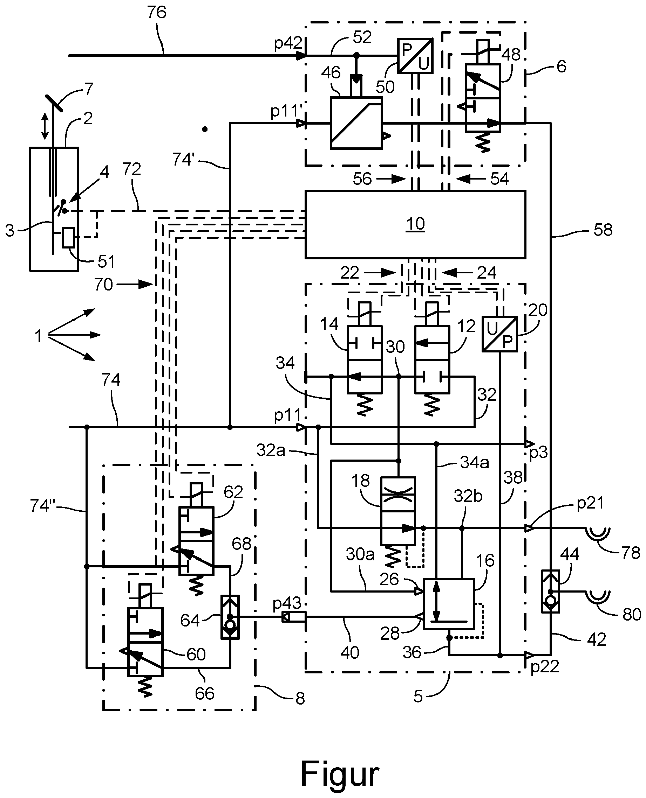

Zur weiteren Verdeutlichung der Erfindung ist der Beschreibung eine Zeichnung mit einem Ausführungsbeispiel beigefügt. In dieser zeigt die einzige Figur eine bekannte Ventilanordnung einer hydraulischen Bremsanlage eines Zugfahrzeugs zur Steuerung einer pneumatischen Bremsanlage eines an dem Zugfahrzeug angekoppelten Anhängerfahrzeugs.

Das erfindungsgemäße Verfahren zur Steuerung einer pneumatischen Bremsanlage eines Anhängerfahrzeugs wird nachfolgend beispielhaft anhand einer in der Figur abgebildeten Ventilanordnung 1 einer hydraulischen Bremsanlage eines Zugfahrzeugs erläutert, welche aus der WABCO-Druckschrift 815 020 082 3 "Druckluftbremsanlage Land- und Forstwirtschaft / Produktkatalog" auf der dortigen Seite 105 bekannt ist.

Diese Ventilanordnung 1 umfasst ein elektronisch gesteuertes Anhängersteuerventil 5, ein hydraulisch gesteuertes Backupventil 6, ein elektronisch gesteuertes Parkbremsmodul 8 sowie ein elektronisches Steuergerät 10. Das Parkbremsmodul 8 könnte auch baulich getrennt von der Ventilanordnung 1 vorhanden sein, und dessen Parkbremsmodule 60, 62 könnten auch von einem anderen Steuergerät angesteuert werden.

Das Anhängersteuerventil 5 weist ein pneumatisch steuerbares Relaisventil 16, ein pneumatisch steuerbares Abrissventil 18, ein Einlassventil 12, ein Auslassventil 14 und einen pneumatischen Drucksensor 20 auf. Das Einlassventil 12 und das Auslassventil 14 sind jeweils als ein 2/2-Wege-Magnetschaltventil, insbesondere als Taktventil, ausgebildet, mittels denen der an einem Steuereingang 26 des pneumatischen Relaisventils 16 anliegende pneumatische Steuerdruck einstellbar ist. Die Schaltmagnete des Einlassventils 12 und des Auslassventils 14 sind über elektrische Steuerleitungen 22 und der Drucksensor 20 über elektrische Sensorleitungen 24 mit dem elektronischen Steuergerät 10 verbunden.

Das Einlassventil 12 ist im unbestromten Zustand wie dargestellt geschlossen und im bestromten Zustand geöffnet. Das Auslassventil 14 ist im unbestromten Zustand wie gezeigt geöffnet und im bestromten Zustand geschlossen. Eine Steuerdruckleitung 30, die von dem Ausgang des Einlassventils 12 und von dem Eingang des Auslassventils 14 zu einem Steuereingang des Abrissventils 18 sowie über einen an diese Steuerdruckleitung 30 anschließenden Leitungszweig 30a an den direkten ersten Steuereingang 26 des pneumatischen Relaisventils 16 führt, ist über das Einlassventil 12 mit einer internen Vorratsdruckleitung 32 und über das Auslassventil 14 mit einer zu einem Entlüftungsausgang p3 führenden Entlüftungsleitung 34 verbindbar. Die Vorratsdruckleitung 32 ist an einen pneumatischen Vorratsdruckeingang p11 des Anhängersteuerventils 5 angeschlossen.

Im eingebauten Zustand des Anhängersteuerventils 5 ist an den Vorratsdruckeingang p11 eine externe pneumatische Vorratsdruckleitung 74 einer pneumatischen Druckluftversorgungsanlage des Zugfahrzeugs angeschlossen, welche bei laufendem Antriebsmotor des Zugfahrzeugs einen Vorratsdruck in Höhe von etwa 8,5 × 10⁵ Pa führt. Ein von der pneumatischen Vorratsdruckleitung 32 abzweigender Leitungsabschnitt 32a ist über das Abrissventil 18 und einen ausgangsseitigen Leitungsabschnitt 32b an einen Vorratsdruckausgang p21 des Anhängersteuerventils 5 geführt. An diesen Vorratsdruckausgang p21 ist ein Kupplungskopf "Vorrat" (rot) 78 angeschlossen.

Ein Vorratsdruckeingang des pneumatischen Relaisventils 16 ist über den abzweigenden Leitungsabschnitt 32a und den ausgangsseitigen Leitungsabschnitt 32b an die pneumatische Vorratsdruckleitung 32 angeschlossen. Ein Entlüftungsausgang des pneumatischen Relaisventils 16 ist über eine Anschlussleitung 34a an die zu dem Entlüftungsausgang p3 führende Entlüftungsleitung 34 angeschlossen. Ein Bremssteuerausgang des pneumatischen Relaisventils 16 ist über eine ausgangsseitige Bremssteuerleitung 36 an einen Bremssteuerausgang p22 des Anhängersteuerventils 5 geführt. Eine an den Bremssteuerausgang p22 angeschlossene externe Bremssteuerleitung 42 ist an einen ersten Eingang eines ersten Wechselventils 44 geführt, an dessen Ausgang ein Kupplungskopf "Bremse" (gelb) 80 angeschlossen ist. Der Drucksensor 20 ist über eine Sensordruckleitung 38 an die ausgangsseitige Bremssteuerleitung 36 angeschlossen. Eine weitere Steuerdruckleitung 40 ist zwischen einem invertierten Steuereingang p43 des Anhängersteuerventils 5 und einem invertierten zweiten Steuereingang 28 des pneumatischen Relaisventils 16 angeordnet.

Das Backupventil 6 weist ein hydraulisch von einem Bremsdruck steuerbares Relaisventil 46, ein elektronisch steuerbares Redundanzventil 48 und einen hydraulischen Drucksensor 50 auf. Ein Steuereingang des hydraulisch steuerbaren Relaisventils 46 ist über eine interne Steuerdruckleitung 52 mit einem hydraulischen Steuerdruckeingang p42 des Backupventils 6 verbunden. Im eingebauten Zustand des Backupventils 6 ist der hydraulische Steuerdruckeingang p42 über eine Anschlussleitung 76 an eine Bremsleitung eines hydraulischen Bremskreises des Zugfahrzeugs angeschlossen. An die interne Steuerdruckleitung 52 ist auch der Drucksensor 50 angeschlossen.

Ein pneumatischer Vorratsdruckeingang des hydraulisch steuerbaren Relaisventils 46 ist an einen Vorratsdruckeingang p11' des Backupventils 6 angeschlossen. Im eingebauten Zustand des Backupventils 6 ist der Vorratsdruckeingang p11' des Backupventils 6 über eine pneumatische Anschlussleitung 74' an die externe pneumatische Vorratsdruckleitung 74 angeschlossen. Ein Bremssteuerausgang des hydraulisch steuerbaren Relaisventils 46 ist über das Redundanzventil 48 und eine externe Bremssteuerleitung 58 mit einem zweiten Eingang des ersten Wechselventils 44 verbindbar.

Bei druckführendem Vorratsdruckeingang p11' des Backupventils 6 wird in dem hydraulisch steuerbaren Relaisventil 46 in Abhängigkeit des an dem Bremsdruckeingang p42 anliegenden hydraulischen Bremsdruckes ein pneumatischer Bremssteuerdruck erzeugt und ausgesteuert, welcher bei geöffnetem Redundanzventil 48 über die externe Bremssteuerleitung 58 an das erste Wechselventil 44 geleitet wird. Das erste Wechselventil 44 leitet den jeweils höheren Bremssteuerdruck aus der Bremssteuerleitung 42 des Anhängersteuerventils 5 oder aus der Bremssteuerleitung 58 des Backupventils 6 an den Kupplungskopf "Bremse" 80 weiter.

Das Redundanzventil 48 ist als ein 3/2-Wege-Magnetschaltventil ausgebildet, dessen Ausgang über die externe Bremssteuerleitung 58 an den zweiten Eingang des ersten Wechselventils 44 angeschlossen ist. Im unbestromten Zustand befindet sich das Redundanzventil 48 in der abgebildeten Offenstellung, in welcher die externe Bremssteuerleitung 58 mit dem Bremssteuerausgang des hydraulisch steuerbaren Relaisventils 46 verbunden ist. Im bestromten Zustand ist das Redundanzventil 48 aus der abgebildeten Offenstellung in seine Sperrstellung umgeschaltet, in welcher der Bremssteuerausgang des hydraulisch steuerbaren Relaisventils 46 abgesperrt und die externe Bremssteuerleitung 58 mit einem Entlüftungsausgang des Redundanzventils 48 verbunden und somit drucklos ist. Der Schaltmagnet des Redundanzventils 48 ist über elektrische Steuerleitungen 54 und der Drucksensor 50 über elektrische Sensorleitungen 56 mit dem elektronischen Steuergerät 10 verbunden.

Das Parkbremsmodul 8 dient zur Ansteuerung des Anhängersteuerventils 5 an dem invertierten Steuerdruckeingang p43 zur Betätigung der Radbremsen eines angekoppelten Anhängerfahrzeugs in einer Parkbrems- oder Hilfsbremsfunktion. Das Parkbremsmodul 8 umfasst zwei parallel geschaltete Parkbremsventile 60, 62 und ein diesen ausgangsseitig nachgeschaltetes zweites Wechselventil 64. Im eingebauten Zustand des Parkbremsmoduls 8 ist der Ausgang des zweiten Wechselventils 64 an den invertierten Steuerdruckeingang p43 des Anhängersteuerventils 5 angeschlossen. Die beiden Parkbremsventile 60, 62 sind als 3/2-Wege-Magnetschaltventile ausgeführt, deren Schaltmagnete im eingebauten Zustand des Parkbremsmoduls 8 über elektrische Steuerleitungen 70 in diesem Ausführungsbeispiel mit dem elektronischen Steuergerät 10 verbunden sind.

Das elektronische Steuergerät 10 steht über einen Datenbus 72, bei dem es sich üblicherweise um einen CAN-Bus handelt, auch mit weiteren elektronischen Steuergeräten, Sensoren und Schaltern des Zugfahrzeugs und eines angekoppelten Anhängerfahrzeugs in Verbindung. Hierzu gehört, wie dargestellt, auch ein an oder in einem Fußbremsventil 2 angeordneter Schalter 4, mit dem zumindest eine anfängliche Betätigung eines Bremspedals 7 feststellbar ist. Außerdem ist das elektronische Steuergerät 10 gegebenenfalls mit dem in der Figur dargestellten Wegsensor 51 messtechnisch verbunden, welcher ebenfalls am oder im Fußbremsventil 2 angeordnet ist und zur Messung eines von einem Stößel 3 des Fußbremsventils 2 zurückgelegten Stellwegs dient.

Über die beiden Parkbremsventile 60, 62 ist jeweils eine an einen der Eingänge des zweiten Wechselventils 64 angeschlossene Bremssteuerleitung 66, 68 wechselweise mit einem Zweig eines von der externen pneumatischen Vorratsdruckleitung 74 abzweigenden Leitungsabschnittes 74" oder mit einem Entlüftungsausgang verbindbar. Das zweite Wechselventil 64 leitet den jeweils höheren Bremssteuerdruck aus der Bremssteuerleitung 66 des ersten Parkbremsventils 60 oder aus der Bremssteuerleitung 68 des zweiten Parkbremsventils 62 über den invertierten Bremssteuerdruckeingang p43 des Anhängersteuerventils 5 und die dortige interne Bremssteuerleitung 40 an den invertierten Steuereingang 28 des pneumatischen Relaisventils 16 weiter.

Im unbestromten Zustand der Parkbremsventile 60, 62 sind die dortigen Bremssteuerleitungen 66, 68 und damit der invertierte Steuereingang 28 des pneumatischen Relaisventils 16 drucklos geschaltet. Hierdurch wird aus dem pneumatischen Relaisventil 16 des Anhängersteuerventils 5 ein maximaler Bremssteuerdruck ausgesteuert, welcher über die interne Bremssteuerleitung 36, den Bremssteuerausgang p22, die externe Bremssteuerleitung 42 und das erste Wechselventil 44 an den Kupplungskopf "Bremse" (gelb) 80 geführt wird. Hierdurch werden bei einem angekoppelten Anhängerfahrzeug dessen Radbremszylinder über das dortige Anhängerbremsventil mit einem maximalen Bremsdruck beaufschlagt, wodurch die dortigen Radbremsen in der Parkbrems- oder Hilfsbremsfunktion eingelegt werden.

Nach der Betätigung, also Umschaltung eines der beiden Parkbremsventile 60, 62 wird die betreffende Bremssteuerleitung 66; 68 und damit der invertierte Steuereingang 28 des pneumatischen Relaisventils 16 aus dem Leitungsabschnitt 74" der externen pneumatischen Vorratsdruckleitung 74 mit dem Vorratsdruck beaufschlagt. Hierdurch werden bei einem angekoppelten Anhängerfahrzeug dessen Radbremszylinder über das dortige Anhängerbremsventil entlüftet, wodurch die dortigen Radbremsen in der Parkbrems- oder Hilfsbremsfunktion gelöst werden.

Im normalen Fahrbetrieb des Zugfahrzeugs sind die beiden Parkbremsventile 60, 62 bestromt und somit umgeschaltet, sodass die Radbremsen eines angekoppelten Anhängerfahrzeugs dann in der Parkbrems- oder Hilfsbremsfunktion gelöst sind. Aus Redundanzgründen weist das elektronische Steuergerät 10 separate Schalteinheiten zur unabhängigen Schaltbetätigung der beiden Parkbremsventile 60, 62 auf, die derart ausgebildet sind, dass der jeweilige Schaltzustand der Parkbremsventile 60, 62 selbsttätig gehalten wird und nur aktiv geändert werden kann.

Im Normalbetrieb der Ventilanordnung 1 ist das Anhängersteuerventil 5 aktiviert und das Backupventil 6 deaktiviert. Ebenso ist das Parkbremsmodul 8 dann solange deaktiviert, wie in dem elektronischen Steuergerät 10 kein Anforderungssignal zum Lösen der Radbremsen des Anhängerfahrzeugs in einer Parkbrems- oder Hilfsbremsfunktion vorliegt.

Bislang erfolgt die Aktivierung des Anhängersteuerventils 5 und die Deaktivierung des Backupventils 6 über ein Schaltsignal des elektrischen Schalters 4, der in oder am Fußbremsventil 2 des Zugfahrzeugs angeordnet ist und nach Überwindung eines kurzen Leerweges des mittels des Bremspedals 7 axial verschiebbaren Stößels 3 geschlossen wird. Bei Vorliegen des entsprechenden Schaltsignals des Schalters 4, welches einen beginnenden Bremsvorgang anzeigt, wird das Backupventil 6 durch die Umschaltung des Redundanzventils 48 in seine Sperrstellung geschaltet und dadurch deaktiviert.

In dem Anhängersteuerventil 5 wird dann über eine entsprechende Ansteuerung der Einlass- und Auslassventile 12, 14 in Abhängigkeit eines vorliegenden elektronischen Bremswertsignals ein an dem direkten Steuereingang 26 des pneumatischen Relaisventils 16 führender Steuerdruck ausgesteuert. Dieser Steuerdruck wird in dem pneumatischen Relaisventil 16 in einen entsprechenden Bremssteuerdruck umgesetzt, welcher über die interne Bremssteuerleitung 36, den Bremssteuerausgang p22, die externe Bremssteuerleitung 42 und das Wechselventil 44 an den Kupplungskopf "Bremse" (gelb) geführt wird.

Das Bremswertsignal kann mittels des in dem oder an dem Fußbremsventil 2 angeordneten Wegsensors 51 erfasst werden. Alternativ dazu kann das Bremswertsignal jedoch mittels eines an eine Bremsleitung des Zugfahrzeugs angeschlossenen Drucksensors erfasst werden. Vorliegend wird die Funktion des Bremswertsensors beispielhaft von dem in dem Backupventil 6 angeordneten, über die interne Steuerdruckleitung 52 und die externe Anschlussleitung 76 an eine hydraulische Bremsleitung des Zugfahrzeugs angeschlossenen Drucksensor 50 erfüllt.

Wenn bei einer Betätigung des Bremspedals 7 dessen elektrischer Schalter 4 geschlossen wird, also das entsprechende Schaltsignal für einen beginnenden Bremsvorgang über den CAN-Bus 72 an das elektronische Steuergerät 10 übertragen wird, jedoch der Drucksensor 50 aufgrund eines Defektes kein Bremswertsignal in Form eines Bremsdruckwertes größer Null an das elektronische Steuergerät 10 übermittelt, wird zwar das Backupventil 6 durch die Umschaltung des Redundanzventils 48 in seine Sperrstellung deaktiviert. Da das von dem Drucksensor 50 erzeugte Bremswertsignal aber den Wert Null beziehungsweise einen Bremsdruck in der Bremsleitung des Zugfahrzeugs von Null Pascal oder annähernd Null Pascal an das Steuergerät übermittelt, wird durch das pneumatische Relaisventil 16 des Anhängesteuerventils 5 kein Bremssteuerdruck ausgesteuert, welcher über einen vorbestimmten Vorsteuerdruck hinausgeht. In dessen Folge wird das Anhängerfahrzeug dann auch nicht gebremst. Ein solcher, noch nicht abbremswirksamer Vorsteuerdruck kann beispielsweise 0,6 × 10⁵ Pa bis 1,0 × 10⁵ Pa betragen.

Dieser Mangel eines ungebremsten Anhängerfahrzeugs wird durch das erfindungsgemäße Steuerungsverfahren vermieden, indem der als Bremswertsensor wirksame Drucksensor 50 zusätzlich oder alternativ zu dem elektrischen Schalter 4 des Fußbremsventils 2 zur Ermittlung eines beginnenden Bremsvorgangs genutzt wird.

Hierzu ist vorgesehen, dass das Backupventil 6 erst dann durch eine Umschaltung des Redundanzventils 48 von der Offenstellung in die Sperrstellung deaktiviert wird, wenn das mittels des Bremswertsensors 50 erzeugte Bremswertsignal einen vorgegebenen Mindestsignalwert erreicht oder überschritten hat. Bei der vorliegenden Verwendung des an eine hydraulische Bremsleitung des Zugfahrzeugs angeschlossenen Drucksensors 50 als Bremswertsensor entspricht der Mindestsignalwert bevorzugt dem Ansprechdruck der Radbremsen des Zugfahrzeugs oder einem den Ansprechdruck der Radbremsen um maximal 20% übersteigenden Bremsdruck. Bei hydraulischen Hochdruck-Bremsanlagen liegt der Ansprechdruck der Radbremsen bei etwa 3 × 10⁵ Pa bis 3,5 ×10⁵ Pa. Demzufolge kann der als Mindestsignalwert verwendete Mindestbremsdruck in diesem Fall auf einen Wert zwischen 3 ×10⁵ Pa bis 4,2 ×10⁵ Pa festgelegt sein.

Wenn der Drucksensor 50 zusätzlich zu dem elektrischen Schalter 4 des Fußbremsventils 2 zur Ermittlung eines beginnenden Bremsvorgangs genutzt wird, erfolgt die Deaktivierung des Backupventil 6 durch eine Umschaltung des Redundanzventils 48 erst dann, wenn der elektrische Schalter 4 geschlossen ist und der mittels des Drucksensors 50 gemessene Bremsdruck den vorgegebenen Mindestbremsdruck erreicht oder überschritten hat.

Es kann aber auch vorgesehen sein, dass dann, wenn der Drucksensor 50 zusätzlich zu dem elektrischen Schalter 4 des Fußbremsventils 2 zur Ermittlung eines beginnenden Bremsvorgangs nutzbar ist, die Deaktivierung des Backupventils 6 durch eine Umschaltung des Redundanzventils 48 allein dann schon erfolgt, wenn der mittels des Drucksensors 50 gemessene Bremsdruck den vorgegebenen Mindestbremsdruck erreicht oder überschritten hat. In diesem Fall ist eine Umschaltung des elektrischen Schalters 4 demnach keine zwingende Bedingung für die Deaktivierung des Backupventils 6.

Sofern der Drucksensor 50 dagegen anstelle des elektrischen Schalters 4 zur Ermittlung eines beginnenden Bremsvorgangs genutzt wird, dann wird das Backupventil 6 nur dann durch eine Umschaltung des Redundanzventils 48 deaktiviert, wenn der mittels des Drucksensors 50 gemessene Bremsdruck den vorgegebenen Mindestbremsdruck erreicht oder überschritten hat.

Bei einem Defekt des Drucksensors 50 oder einem aus einem anderen Grund fehlenden Bremswertsignal ist somit auf einfache Weise und ohne einen apparativen Mehraufwand sichergestellt, dass das Backupventil 6 aktiviert bleibt. Somit wird in diesem Fall in dem hydraulisch steuerbaren Relaisventil 46 des Backupventils 6 ein Bremssteuerdruck eingestellt und ausgesteuert sowie an den Kupplungskopf "Bremse" (gelb) 80 geleitet, sodass das Anhängerfahrzeug entsprechend gebremst wird.

### Bezugszeichen

- 1: Ventilanordnung
- 2: Fußbremsventil
- 3: Stößel des Fußbremsventils
- 4: Elektrischer Schalter am Fußbremsventil
- 5: Anhängersteuerventil
- 6: Backupventil
- 7: Bremspedal
- 8: Parkbremsmodul
- 10: Elektronisches Steuergerät
- 12: Einlassventil, 2/2-Wege-Magnetventil
- 14: Auslassventil, 2/2-Wege-Magnetventil
- 16: Pneumatisch steuerbares Relaisventil
- 18: Abrissventil
- 20: Pneumatischer Drucksensor
- 22: Steuerleitungen
- 24: Sensorleitungen
- 26: Direkter Steuereingang am pneumatischen Relaisventil
- 28: Invertierter Steuereingang am pneumatischen Relaisventil
- 30: Steuerdruckleitung
- 30a: Leitungszweig
- 32: Vorratsdruckleitung
- 32a: Erster Leitungsabschnitt
- 32b: Zweiter Leitungsabschnitt
- 34: Entlüftungsleitung
- 34a: Anschlussleitung
- 36: Bremssteuerleitung
- 38: Sensordruckleitung
- 40: Steuerdruckleitung
- 42: Bremssteuerleitung
- 44: Erstes Wechselventil
- 46: Hydraulisch steuerbares Relaisventil
- 48: Redundanzventil
- 50: Hydraulischer Drucksensor, Bremswertsensor (erste Alternative)
- 51: Wegsensor, Bremswertsensor (zweite Alternative)
- 52: Steuerdruckleitung
- 54: Steuerleitungen
- 56: Sensorleitungen
- 58: Bremssteuerleitung
- 60: Erstes Parkbremsventil
- 62: Zweites Parkbremsventil
- 64: Zweites Wechselventil
- 66: Erste Bremssteuerleitung
- 68: Zweite Bremssteuerleitung
- 70: Steuerleitungen
- 72: Datenbus, CAN-Bus
- 74: Pneumatische Vorratsdruckleitung, Bremssteuerleitung
- 74': Pneumatische Anschlußleitung
- 74": Pneumatischer Leitungsabschnitt
- 76: Hydraulische Anschlußleitung zur Bremsleitung des Zugfahrzeugs
- 78: Kupplungskopf "Vorrat" (rot)
- 80: Kupplungskopf "Bremse" (gelb)
- p3: Entlüftungsausgang
- p11: Vorratsdruckeingang am Anhängersteuerventil
- p11': Vorratsdruckeingang am Backupventil
- p21: Vorratsdruckausgang am Anhängersteuerventil
- p22: Bremssteuerausgang am Anhängersteuerventil
- p42: Hydraulischer Steuerdruckeingang am Backupventil, Bremsdruckeingang
- p43: Steuerdruckeingang am Anhängersteuerventil

## Patentansprüche

1. Verfahren zur Steuerung einer pneumatischen Bremsanlage eines Anhängerfahrzeugs,
welches mit einem eine hydraulische oder pneumatische Bremsanlage aufweisenden Zugfahrzeug verbunden ist,
wobei die Bremsanlage des Zugfahrzeugs
- ein Fußbremsventil (2) mit einem elektrischen Schalter (4),
- ein Anhängersteuerventil (5) mit elektrisch gesteuerten Einlass- und Auslassventilen (12, 14) sowie mit einem pneumatisch gesteuerten Relaisventil (16),
- und ein Backupventil (6) mit einem elektrisch gesteuerten Redundanzventil (48), einem hydraulisch von einem Bremsdruck steuerbaren Relaisventil (46) und einem Bremswertsensor aufweist,
wobei verfahrensgemäß
der elektrische Schalter (4) zu Beginn einer Betätigung des Fußbremsventils (2) aus einer Öffnungsstellung heraus geschlossen oder aus einer Schließstellung heraus geöffnet und dieses Schaltsignal als Bremsstartsignal für einen beginnenden Bremsvorgang an ein elektronisches Steuergerät (10) übermittelt wird,
und wobei mit dem Bremswertsensor ein den aktuellen Verzögerungswunsch des Fahrers repräsentierender Bremswert erfasst sowie als Bremswertsignal an das elektronische Steuergerät (10) übermittelt wird,
**dadurch gekennzeichnet,**
**dass** der Bremswertsensor (50, 51) zur Ermittlung eines beginnenden Bremsvorgangs genutzt wird,
und **dass** das Backupventil (6) erst dann durch eine Umschaltung des Redundanzventils (48) von einer Offenstellung in eine Sperrstellung deaktiviert wird,
wenn das mittels des Bremswertsensors (50, 51) erfasste Bremswertsignal einen vorgegebenen Mindestsignalwert erreicht oder überschritten hat.

2. Verfahren nach Anspruch 1, **dadurch gekennzeichnet, dass** der Bremswertsensor (50, 51) zusätzlich zu dem elektrischen Schalter (4) zur Ermittlung eines beginnenden Bremsvorgangs genutzt wird, und dass das Backupventil (6) erst dann deaktiviert wird, wenn der elektrische Schalter (4) geschlossen ist sowie das mittels des Bremswertsensors (50, 51) erzeugte Bremswertsignal den vorgegebenen Mindestsignalwert erreicht oder überschritten hat.

3. Verfahren nach Anspruch 1, **dadurch gekennzeichnet, dass** der Bremswertsensor (50, 51) anstelle des elektrischen Schalters (4) zur Ermittlung eines beginnenden Bremsvorgangs genutzt wird, und dass das Backupventil (6) nur dann deaktiviert wird, wenn das mittels des Bremswertsensors (50, 51) erzeugte Bremswertsignal den vorgegebenen Mindestsignalwert erreicht oder überschritten hat.

4. Verfahren nach einem der Ansprüche 1 bis 3, **dadurch gekennzeichnet, dass** bei einer Ausbildung des Bremswertsensors als ein Wegsensor (51), welcher in oder an dem Fußbremsventil (2) in Wirkverbindung mit einem axial verschiebbaren Stößel (7) desselben angeordnet ist, der Mindestsignalwert dem Leerweg des Stößels (7) oder einem den Leerweg um maximal 20% übersteigenden Stellweg des Stößels (7) entspricht.

5. Verfahren nach einem der Ansprüche 1 bis 3, **dadurch gekennzeichnet, dass** bei einer Ausbildung des Bremswertsensors als ein Drucksensor (50), der an eine Bremsleitung eines mit einer hydraulischen oder pneumatischen Bremsanlage ausgerüsteten Zugfahrzeugs angeschlossen ist, der Mindestsignalwert dem Ansprechdruck der Radbremsen des Zugfahrzeugs oder einem den Ansprechdruck der Radbremsen um maximal 20% übersteigenden Bremsdruck entspricht.

## Claims

1. Method for controlling a pneumatic braking system of a trailer vehicle which is connected to a tow vehicle equipped with a hydraulic or pneumatic braking system, wherein the braking system of the tow vehicle comprises
- a foot brake valve (2) with an electrical switch (4),
- a trailer control valve (5) with electrically controlled inlet and outlet valves (12, 14) and with a pneumatically controlled relay valve (16),
- and a backup valve (6) with an electrically controlled redundancy valve (48), a relay valve (46) which can be controlled hydraulically by a braking pressure, and a brake value sensor,
wherein according to the method
at the start of an actuation of the foot brake valve (2), the electrical switch (4) is closed from an open position or opened from a closed position, and this switching signal is transmitted to an electronic control unit (10) as a braking start signal for an incipient braking process,
and wherein by means of the brake value sensor, a brake value representative of the driver's current deceleration request is detected and transmitted to the electronic control unit (10) as a brake value signal, **characterized**
**in that** the brake value sensor (50, 51) is used for determining an incipient braking process,
and **in that** the backup valve (6) is only deactivated by a switching of the redundancy valve (48) from an open position to a blocking position if the brake value signal detected by means of the brake value sensor (50, 51) has reached or exceeded a predefined minimum signal value.

2. Method according to Claim 1, **characterized in that** the brake value sensor (50, 51) is used in addition to the electrical switch (4) for determining an incipient braking process, and **in that** the backup valve (6) is deactivated only if the electrical switch (4) is closed and the brake value signal produced by means of the brake value sensor (50, 51) has reached or exceeded the predefined minimum signal value.

3. Method according to Claim 1, **characterized in that** the brake value sensor (50, 51) is used instead of the electrical switch (4) for determining an incipient braking process, and **in that** the backup valve (6) is deactivated only if the brake value signal produced by means of the brake value sensor (50, 51) has reached or exceeded the predefined minimum signal value.

4. Method according to any of Claims 1 to 3, **characterized in that**, when the brake value sensor is configured as a travel sensor (51) which is arranged in or on the foot brake valve (2) and actively connected with an axially displaceable slide (7) thereof, the minimum signal value corresponds to the idle travel of the slide (7) or an adjustment travel of the slide (7) exceeding the idle travel by maximum 20%.

5. Method according to any of Claims 1 to 3, **characterized in that**, when the brake value sensor is configured as a pressure sensor (50) which is connected to a brake line of a tow vehicle equipped with a hydraulic or pneumatic braking system, the minimum signal value corresponds to the response pressure of the wheel brakes of the tow vehicle or a braking pressure exceeding the response pressure of the wheel brakes by maximum 20%.

## Revendications

1. Procédé permettant de commander un système de freinage pneumatique d'un véhicule tracté qui est relié à un véhicule tracteur présentant un système de freinage hydraulique ou pneumatique,
dans lequel le système de freinage du véhicule tracteur présente
- une soupape de frein au pied (2) pourvue d'un commutateur électrique (4),
- une soupape de commande de remorque (5) pourvue de soupapes d'entrée et de sortie (12, 14) à commande électrique ainsi que d'une valve-relais (16) à commande pneumatique,
- et une soupape de secours (6) pourvue d'une soupape redondante (48) à commande électrique, d'une valve-relais (46) pouvant être commandée hydrauliquement par une pression de freinage, et d'un capteur de valeur de freinage,
dans lequel, selon le procédé,
le commutateur électrique (4) est fermé au début d'un actionnement de la soupape de frein au pied (2) à partir d'une position d'ouverture ou est ouvert à partir d'une position de fermeture, et ce signal de commutation est transmis à un appareil de commande électronique (10) comme un signal de début de freinage pour une opération de freinage qui commence,
et dans lequel le capteur de valeur de freinage détecte une valeur de freinage représentant le souhait de décélération actuel du conducteur et la transmet à l'appareil de commande électronique (10) comme un signal de valeur de freinage,
**caractérisé**
**en ce que** le capteur de valeur de freinage (50, 51) est utilisé pour déterminer une opération de freinage qui commence,
et **en ce que** la soupape de secours (6) est désactivée par une commutation de la soupape redondante (48) d'une position d'ouverture à une position de blocage seulement lorsque le signal de valeur de freinage détecté au moyen du capteur de valeur de freinage (50, 51) a atteint ou dépassé une valeur de signal minimale prédéfinie.

2. Procédé selon la revendication 1, **caractérisé en ce que** le capteur de valeur de freinage (50, 51) est utilisé en plus du commutateur électrique (4) pour déterminer une opération de freinage qui commence, et **en ce que** la soupape de secours (6) est désactivée seulement lorsque le commutateur électrique (4) est fermé et le signal de valeur de freinage généré au moyen du capteur de valeur de freinage (50, 51) a atteint ou dépassé la valeur de signal minimale prédéfinie.

3. Procédé selon la revendication 1, **caractérisé en ce que** le capteur de valeur de freinage (50, 51) est utilisé au lieu du commutateur électrique (4) pour déterminer une opération de freinage qui commence, et **en ce que** la soupape de secours (6) est désactivée seulement lorsque le signal de valeur de freinage généré au moyen du capteur de valeur de freinage (50, 51) a atteint ou dépassé la valeur de signal minimale prédéfinie.

4. Procédé selon l'une quelconque des revendications 1 à 3, **caractérisé en ce que** pour une réalisation du capteur de valeur de freinage sous la forme d'un capteur de déplacement (51) qui est disposé dans ou sur la soupape de frein au pied (2) en relation fonctionnelle avec un poussoir (7) axialement coulissant de celui-ci, la valeur de signal minimale correspond à la course à vide du poussoir (7) ou à une course de réglage du poussoir (7) dépassant la course à vide d'un maximum de 20 %.

5. Procédé selon l'une quelconque des revendications 1 à 3, **caractérisé en ce que** pour une réalisation du capteur de valeur de freinage sous la forme d'un capteur de pression (50) qui est raccordé à une conduite de frein d'un véhicule tracteur équipé d'un système de freinage hydraulique ou pneumatique, la valeur de signal minimale correspond à la pression de réponse des freins de roue du véhicule tracteur ou à une pression de freinage dépassant la pression de réponse des freins de roue d'un maximum de 20 %.
